# EUROPÄISCHE PATENTANMELDUNG

(11) **EP 2 422 621 A1**
(43) Veröffentlichungstag der Anmeldung: **29.02.2012**
(21) Anmeldenummer: 11178140.7
(22) Anmeldetag: 19.08.2011
(51) Int. Cl.: A01N 51/00, A01N 25/14

(54) **Pulverformulierung umfassend Imidacloprid und Oxalsäure, sowie Verfahren zur Herstellung von Co-Kristallen umfassend Imidacloprid und Oxalsäure durch Kompaktieren**

(30) Priorität: 24.08.2010 DE 102010039687
(71) Anmelder: Bayer Technology Services GmbH, 51368 Leverkusen (DE)
(72) Erfinder: Weiß, Martin, 53332 Bornheim/Sechtem (DE); Temming Kai, 51375 Leverkusen (DE)

(57) **Zusammenfassung**

Die vorliegende Erfindung betrifft Pulverformulierungen umfassend das Insektizid Imidacloprid und Oxalsäure, sowie ein Verfahren zur Herstellung von Co-Kristallen umfassend Imidacloprid und Oxalsäure durch Kompaktieren von Pulvern von Imidacloprid und Oxalsäure

## Beschreibung

Die vorliegende Erfindung betrifft Pulverformulierungen umfassend das Insektizid Imidacloprid und Oxalsäure, sowie ein Verfahren zur Herstellung von Co-Kristallen umfassend Imidacloprid und Oxalsäure durch Kompaktieren von Pulvern von Imidacloprid und Oxalsäure

Imidacloprid ist ein systemisches Insektizid aus der Gruppe der Neonicotinoide. Es findet seit seiner Entdeckung im Jahr 1985 weltweit Anwendung.

Imidacloprid ist ein systemisches Insektizid, das als Kontakt- wie auch Fraßgift wirken kann. Es wird gut über die Wurzeln aufgenommen und in die Blätter transportiert, die dann vor beißenden und saugenden Insekten geschützt sind. Wird es direkt auf die Blätter ausgebracht, verteilt es sich zwischen Blattober- und Blattunterseite und wird auch zu neugebildeten Blättern hin weitertransportiert. Da Imidacloprid in der Pflanze nur langsam abgebaut wird, hält seine Wirkung längere Zeit an.

Imidacloprid kann darüber hinaus zur Saatgutbeizung bei Zucker- und Futterrüben, Getreide, Kartoffeln, Mais, Zwiebeln und dem Ölkürbis eingesetzt werden. Hier wirkt es beispielsweise gegen Pflanzenläuse, Drahtwürmer, Kartoffelkäfer sowie die Frit-, Zwiebel- und Rübenfliege.

Imidacloprid kann außerdem seit 1996 gegen Tierläuse und Flöhe bei Hunden und Katzen verwendet werden.

Beim Insekt wirkt Imidacloprid wie Acetylcholin am nikotinischen Acetylcholinrezeptor der Nervenzellen, es wird aber nicht durch das Enzym Acetylcholinesterase abgebaut. Durch den ausgelösten Dauerreiz wird die chemische Signalübertragung gestört.

Imidacloprid kann als Reinstoff in zwei Kristallformen vorliegen, wobei die erste Kristallform einen Schmelzpunkt von 136,4°C und die zweite Kristallform einen Schmelzpunkt von 143,8°C aufweist. Es ist mit 0,51 g/l (bei 20°C) nur mäßig wasserlöslich.

Im Allgemeinen können für jeden Feststoff im Wesentlichen amorphe und kristalline Erscheinungsformen, sowie gegebenenfalls Polymorphe, Hydrate und Solvate existieren, die insbesondere die physikalischen Eigenschaften, wie Löslichkeit in verschiedenen Lösungsmitteln, Bioverfügbarkeit bei Aufnahme in einen Organismus, Hygroskopizität und Schmelzpunkt signifikant beeinflussen können. Diese physikalischen Eigenschaften können die Verwendbarkeit des Stoffes in der einen oder anderen Weise einschränken oder erweitern.

Eine andere Form, die die physikalischen Eigenschaften von kristallinen Substanzen beeinflussen kann, ist das Vorliegen eines sogenannten Co-Kristalls umfassend die kristalline Substanz, deren Eigenschaften beeinflusst werden soll mit sogenannten Co-Formern. Der somit entstehende Co-Kristall enthaltend mindestens einen Co-Former, sowie die kristalline Substanz zeichnet sich sodann durch andere und gegebenenfalls vorteilhafte physikalische Eigenschaften gegenüber der ursprünglichen kristallinen Substanz in Reinform aus.

In der WO 2008/013823 A2 wird ein Verfahren zur Herstellung eines Co-Kristalls umfassend (2R-trans)-6-Chloro-5[[4-[(4-fluorophenyl)methyl]-2,5-dimethyl-1-piperazinyl]carbonyl]-N,N, 1-Trimethyl-alpha-oxo-1H-indol-3-acetamid oder dessen Hydrochlorid oder dessen freie Base offenbart.

Die in der WO 2008/013823 A2 offenbarten Co-Former umfassen Arginin, Urea, Salizylsäure, 4-Amino-Salizylsäure und Benzoesäure. Es wird offenbart, dass die gefundenen Co-Kristalle eine vorteilhafte Löslichkeit, Lösungsgeschwindigkeit, Bioverfügbarkeit, Stabilität und Weiterverarbeitbarkeit aufweisen. Die offenbarten Co-Kristalle können auch mehr als einen Co-Former enthalten. Das stöchiometrische Verhältnis, in dem kristalliner Feststoff und Co-Former zueinander vorliegen können, kann 1:1, 2:1 1 oder 1:2 betragen.

Das in der WO 2008/013823 A2 offenbarte Verfahren zur Herstellung der Co-Kristalle kann durch Mahlen des kristallinen Feststoffs gemeinsam mit dem mindestens einen Co-Former oder gemeinsames Schmelzen des kristallinen Feststoffs mit dem mindestens einen Co-Former, oder alternativ durch gemeinsames Auflösen von kristallinem Feststoff mit dem mindestens einen Co-Former und nachfolgendes Kristallisieren gekennzeichnet sein. Hierbei können die kristalline Substanz und der mindestens eine Co-Former in einem stöchiometrischen Verhältnis von 1:1 bis 1:100 zueinander vorliegen. Das vorgenannte Mahlen des kristallinen Feststoffs gemeinsam mit dem mindestens einen Co-Former kann auch zusammen mit einer geringen Menge an Lösungsmittel durchgeführt werden.

Die in der WO 2008/013823 A2 offenbarten Verfahren zur Charakterisierung des entstandenen Co-Kristalls umfassen Thermogravimetrische Analyse (TGA), Pulver-Röntgenanalytische Messungen (p-XRD) und Differentielle Kalorimetrie (DSC).

Die WO 2008/013823 A2 offenbart keinen Co-Kristall umfassend Imidacloprid. Weiter offenbart die WO 2008/013823 A2 zwar, dass es im Allgemeinen möglich ist, dass sich Co-Kristalle eines kristallinen Feststoffes durch eine Verbesserung der zuvor genannten physikalischen Eigenschaften auszeichnen können, allerdings wird dies im Zusammenhang mit dem offenbarten Co-Kristall nicht offenbart.

Die WO 2008/013823 A2 offenbart neben den vorgenannten Verfahren zur Herstellung - trockenes oder feuchtes Mahlen, Kristallisieren aus der Schmelze, Kristallisieren aus der Lösung - keine weiteren Verfahren, die geeignet wären, die beschriebenen Co-Kristalle zu erzeugen.

In der US 2007/0212683 A1 wird ein Co-Kristall von VX-950, einem Hepatitis-C-Virus Inhibitor unter anderem mit Oxalsäure offenbart.

Ähnlich zur Offenbarung der WO 2008/013823 A2 wird auch hier allgemein offenbart, dass die erhaltenen Co-Kristalle vorteilhafte physikalische Eigenschaften haben können. Es wird zwar eine Stabilitätsmessung einer Suspension des Co-Kristalls offenbart, eine vergleichende Offenbarung zwischen dem reinen kristallinen Feststoff und den Co-Kristallen kann jedoch nicht gefunden werden.

Die Verfahren, die in der US 2007/0212683 A1 zur Herstellung der dort beschriebenen Co-Kristalle offenbart werden, sind Mahlen, Schmelzen, Co-Sublimation, Co-Schmelzen oder gemeinsames Lösen von VX-950 mit dem Co-Former unter Kristallisationsbedingungen. Weitere Möglichkeiten zur Herstellung der in der US 2007/0212683 A1 offenbarten Co-Kristalle werden nicht offenbart.

In der WO 2008/096005 A1 werden Co-Kristalle von Thiophanat-methyl mit landwirtschaftlichen organischen Stoffen offenbart. In der Liste der möglichen landwirtschaftlichen organischen Stoffe, die mit Thiophanat-methyl einen Co-Kristall bilden können, wird auch Imidacloprid offenbart (S. 7, Z. 22).

Es wird offenbart, dass die landwirtschaftlichen organischen Stoffe mindestens eine funktionelle Gruppe umfassen müssen, die als Wasserstoffakzeptor einer Wasserstoffbrückenbindung wirken muss. Die Offenbarung bezieht sich insbesondere auf die Wirkung von Thiophanat-methyl als Co-Former zusammen mit anderen landwirtschaftlichen organischen Stoffen.

Die WO 2008/096005 A1 offenbart keinen Co-Kristall von Imidacloprid mit Oxalsäure als Co-Former. Es wird auch offenbart, dass die Bildung solcher Co-Kristalle weder maßgeschneidert, noch vorhergesagt werden kann.

Die gemäß der WO 2008/096005 A1 geeigneten Verfahren zur Herstellung der dort beschriebenen Co-Kristalle sind - wie bereits in der US 2007/0212683 A1 beschrieben - solche ausgewählt aus Kristallisation aus der Lösung, Kristallisation aus einer Suspension, Kristallisation aus der Schmelze und gemeinsames Mahlen bei erhöhten Temperaturen.

Das Mahlen sowie die vorgenannten alternativen Verfahren zur Herstellung von Co-Kristallen weisen aber den Nachteil auf, dass das unmittelbare Verfahrensprodukt (der gebildete Co-Kristall) nachfolgend noch weiter verarbeitet werden muss, um ein verkaufsfertiges Produkt zu erhalten.

Insbesondere umfassen solche weiteren Verarbeitungsschritte das Reinigen des Verfahrensproduktes von Rückständen aus dem Kristallisationsprozess, wie beispielsweise etwaigen Rückständen eines oder mehrer Lösungsmittel.

Ein trockenes Mahlen (d.h. ohne Lösungsmittel), wie es gemäß den vorstehenden Dokumenten aus dem Stand der Technik ebenso zu entnehmen ist, erfordert mindestens die Prüfung auf Rückstände aus dem Mahlvorgang, wie beispielsweise Metallabrieb von den Mahlkörpern oder gar ganze Mahlkörper, die im fertigen Produkt nicht enthalten sein dürfen. Gegebenenfalls muss das Produkt hiervon mehr oder minder aufwändig gereinigt werden.

Darüber hinaus sind alle vorgenannten Verfahrensweisen zur Herstellung von Co-Kristallen diskontinuierliche Verfahren, was für die Herstellung größerer Mengen an Co-Kristallen von Nachteil ist.

In Medina et al., "Manufacture of Pharmaceutical Co-Crystals Using Twin Screw Extrusion: A Solvent-Less and Scalable Process", erschienen im Journal of Pharmaceutical Sciences (Vol. 99 Issue 4, 2010, Seiten 1693-1696) beschreiben diese, dass mittels Extrusion Co-Kristalle von Koffein mit Oxalsäure und von "AMG 517" (ein schwer wasserlöslicher VR1 Antagonist) mit Sorbinsäure erhalten werden können. Solche Verfahren weisen den Vorteil auf, dass sie die vorgenannten Aufarbeitungsschritte erübrigen und auch leicht skalierbar sind.

Medina et al. offenbaren aber nicht, dass die Herstellung von Pulverformulierungen umfassend einen Co-Kristall von Imidacloprid mit Oxalsäure mittels des Verfahrens möglich ist.

In der internationalen Anmeldung PCT/EP2010/002137 wird die Möglichkeit der Herstellung eines Co-Kristalls aus Imidacloprid und Oxalsäure beschrieben.

Die PCT/EP2010/002137 offenbart aber keine Methode zur Herstellung von solchen Co-Kristallen in Abwesenheit von Lösungsmitteln oder durch andere Mittel als Mahlen. Die Verfahren zur Herstellung der Co-Kristalle sind ihrem Wesen nach diskontinuierlich und können auch nicht ohne Weiteres in eine kontinuierliche Betriebsweise umgestellt werden.

Ausgehend vom Stand der Technik und den hierin gefundenen Mängeln besteht also die Aufgabe, eine Pulverformulierung umfassend Imidacloprid und Oxalsäure zur Verfügung zu stellen, die positive Veränderungen von relevanten physikalischen Eigenschaften des Imidacloprid aufweist und die in einer Form erhalten wird, die eine weitere Verarbeitung entbehrlich macht. Ein Verfahren zur Herstellung solcher Pulverformulierungen, das kontinuierlich unter Erhalt der vorgenannten Vorteile betrieben werden kann, ist ebenso wünschenswert.

Es wurde nun als erster Gegenstand dieser Erfindung überraschend gefunden, dass eine Pulverformulierung umfassend Imidacloprid und Oxalsäure, hergestellt durch ein Verfahren, das **dadurch gekennzeichnet** ist, dass Imidacloprid und Oxalsäure als Co-Former in Pulverform zusammen kompaktiert werden, diese Aufgabe zu lösen vermag.

Die erhaltene Pulverformulierung weist üblicherweise gegenüber dem Pulver der beiden Ausgangsstoffe einen jeweils größeren mittleren Partikeldurchmesser auf, da es in der vorgenannten Pulverformulierung nach dem dargelegten erfindungsgemäßen Verfahren überraschenderweise zu einer Ausbildung von Co-Kristallen von Imidacloprid und Oxalsäure kommt.

Im Zusammenhang mit der vorliegenden Erfindung bezeichnet Co-Kristall einen bei Raumtemperatur (23°C) und Umgebungsdruck (1013 hPa) festen Stoff, der in seinem Kristallgitter mindestens zwei durch Wasserstoffbrückenbindung miteinander in Wechselwirkung stehende Reinsubstanzen enthält, wobei alle im Kristallgitter vorliegenden Reinsubstanzen bei Raumtemperatur (23°C) und Umgebungsdruck (1013 hPa) ebenfalls Feststoffe sind.

Der Begriff Co-Former, wie er im Zusammenhang mit der vorliegenden Erfindung verwendet wird, bezeichnet eine Reinsubstanz, die nicht Imidacloprid ist und die zusammen mit Imidacloprid in mindestens einem stöchiometrischen Verhältnis ein Addukt bildet, das nur einen Schmelzpunkt hat.

Imidacloprid kann im Zusammenhang mit der vorliegenden Erfindung jeder Polymorph, jedes Solvat und auch jedes Hydrat des Stoffs gemäß Formel (I): 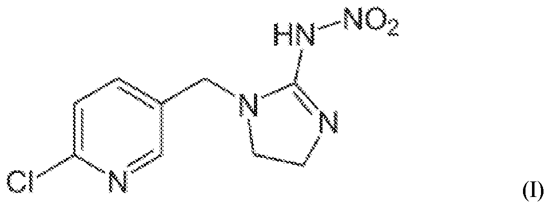 sein.

In bevorzugten Ausführungsformen der vorliegenden Erfindung ist aber Imidacloprid ein Polymorph, oder ein Solvat mit Aceton, Ethylacetat, Ethanol oder 2-Propanol des Stoffs gemäß der Formel (I). Besonders bevorzugt ist Imidacloprid ein Polymorph des Stoffs gemäß der Formel (I) mit einem Schmelzpunkt von etwa 144°C.

Die erfindungsgemäße Pulverformulierung hat einen gegenüber der Reinsubstanz Imidacloprid erhöhten Schmelzpunkt.

Als Schmelzpunkt wird im Zusammenhang mit der vorliegenden Erfindung jene Temperatur verstanden, bei der die Substanz bei Messung des Schmelzpunktes in einer differentiellen Kalorimetrie ("Differential Scanning Calorimetry", im Rahmen dieser Erfindung auch kurz: DSC) mit einer Aufheizrate von 5°C pro Minute die höchste Wärmeabgabe aufweist. Das Schmelzen der Substanz setzt bereits früher ein als bei jener Temperatur, bei der die vorgenannte höchste Wärmeabgabe zu messen ist und endet üblicherweise auch bei höheren Temperaturen, weshalb die im Folgenden angegebenen Schmelzpunkte nach anderen Definitionen des Schmelzpunktes durchaus auch bei niedrigeren oder höheren Temperaturen liegen können.

Der erhöhte Schmelzpunkt der erfindungsgemäßen Pulverformulierung ist besonders vorteilhaft, weil somit die Pulverformulierung im Gegensatz zum Reinstoff Imidacloprid bei höheren Temperaturen verwendet werden kann, ohne zu schmelzen.

Solche höheren Temperaturen können etwa beim Lagern unter erhöhten Temperaturen auftreten.

Hierbei neigt die erfindungsgemäß erhaltene Pulverformulierung nicht dazu beim Lagern unter erhöhten Temperaturen an ihrer Oberfläche anzuschmelzen und somit zu agglomerieren oder an der Wand des Transportbehälters, in dem sie transportiert wird, anzuhaften.

Die Pulverformulierung gemäß einer ersten bevorzugten Weiterentwicklung hat einen Schmelzpunkt, gemessen mittels differentieller Kalorimetrie (DSC), im Bereich von 150°C bis 160°C, bevorzugt im Bereich von 150°C bis 158°C, besonders bevorzugt von etwa 152°C.

Das stöchiometrische Verhältnis von Imidacloprid zu Oxalsäure im Co-Kristall der Pulverformulierung gemäß der Erfindung beträgt üblicherweise 1:1.

Es ist damit bevorzugt, das stöchiometrische Verhältnis der beiden Pulver von Oxalsäure und Imidacloprid im Herstellverfahren der erfindungsgemäßen Pulverformulierung direkt auf 1:1 1 einzustellen, damit die Pulverformulierung möglichst ausschließlich aus Co-Kristallen besteht.

Alle vorgenannten Schmelzpunkte können in allgemein bekannter Art und Weise durch differentielle Kalorimetrie (DSC) ermittelt werden.

Der in der Pulverformulierung enthaltene Co-Kristall ist weiter dadurch gekennzeichnet, dass er eine Trikline Morphologie aufweist.

Hierbei weist der in der Pulverformulierung enthaltene Co-Kristall die Raumgruppe P-1 gemäß Cambridge Strukturdatenbank (F. H., Allen, Acta Cryst.B58, (2002) 380-388) auf.

Die vorgenannten Morphologie und Raumgruppe, wie auch das vorstehend erwähnte stöchiometrische Verhältnis von Imidacloprid zu Oxalsäure können in allgemein bekannter Art und Weise durch Röntgenbeugungsanalyse eines Einkristalls (X-Ray-Diffractometry, im Rahmen dieser Erfindung auch kurz: XRD) des Co-Kristalls ermittelt werden.

Die Pulverformulierung weist weiterhin in einer Pulver-Röntgenbeugungsanalyse (Powder-X-Ray-Diffractometry, im Rahmen dieser Erfindung auch kurz: p-XRD) einen Messausschlag bei 2 Θ von 26° bis 27° auf, bevorzugt bei 2 Θ von etwa 26,4° auf, den keiner der beiden Reinstoffe Imidacloprid und/oder Oxalsäure aufweist.

Weiter weist die Pulverformulierung in der vorgenannten Pulver-Röntgenbeugungsanalyse (p-XRD) Messausschläge bei 2 Θ von 18° bis 19°, bevorzugt bei 2 Θ von etwa 18,5° und bei 2 Θ von 27° bis 28°, bevorzugt bei 2 Θ von etwa 27,5°.

Von einem Messausschlag wird im Zusammenhang mit der vorliegenden Erfindung gesprochen, wenn der höchste Messwert eines solchen Messausschlags um mindestens den Faktor 2, bevorzugt um mindestens den Faktor 5 von der die Basislinie der Messung abweicht und wenn die unmittelbar benachbarten Messwerte dieses höchsten Messwerts niedrigere Messwerte sind, wobei unmittelbar benachbart einen Winkelbereich von 2 Θ = ± 0,1° bedeutet.

Basislinie der Messung ist jene im Wesentlichen horizontale Linie, die durch jene Messwerte approximativ gelegt werden kann, die nicht an einem oder mehreren Messausschlägen beteiligt sind.

Dem Fachmann ist allgemein bekannt, dass die absolute Lage der Basislinie, wie auch die absolute Höhe des höchsten Messwerts eines Messausschlags von der Messdauer abhängen, weshalb nur die relativen Verhältnisse von Basislinie zu Messausschlag und die Lage der Messausschläge maßgeblich sind.

Der Wert für 2 Θ des Messausschlags orientiert sich an der Lage des höchsten Messwerts des Messausschlags, so dass bei einem Messausschlag im Bereich von 2 Θ von 26° bis 27° der höchste Messwert dieses Messausschlags innerhalb dieses Bereich liegt, bzw. bei 2 Θ von etwa 26,4° der höchste Messwert dieses Messausschlags entweder bei exakt 26,4°, oder in einem Bereich von ± 0,2° um diesen Wert liegt.

Durch das erfindungsgemäße Kompaktieren von Imidacloprid und Oxalsäure kann insbesondere auf die Verwendung von Lösungsmitteln oder auf das Einbringen von Wärmeenergie (etwa zum Schmelzen) verzichtet werden. Die somit erhaltene Pulverformulierung ist insbesondere frei von Lösemittelrückständen und Mahlrückständen.

Ein weiterer Gegenstand der vorliegenden Erfindung ist ein Verfahren zur Herstellung einer Pulverformulierung umfassend einen Co-Kristall von Imidacloprid und Oxalsäure, **dadurch gekennzeichnet**, dass es mindestens die Schritte
a) Vermengen von Pulvern von Imidacloprid und Oxalsäure unter Erhalt einer Mischung A und
b) gemeinsames Kompaktieren der beiden Pulver der Mischung A
umfasst.

Das Vermengen gemäß Schritt a) des erfindungsgemäßen Verfahrens kann geschehen indem entweder Imidacloprid vorgelegt wird und Oxalsäure zugegeben wird, oder umgekehrt. Bevorzugt wird das Imidacloprid vorgelegt und Oxalsäure unter Wiegen zudosiert.

Die gemäß dem Schritt a) des erfindungsgemäßen Verfahrens erhaltene Mischung A kann Imidacloprid und Oxalsäure in beliebigen stöchiometrischen Verhältnissen enthalten.

Bevorzugt enthält die Mischung A aber Imidacloprid in einem stöchiometrischen Verhältnis von 1:1 1 zu Oxalsäure.

Hieraus ergibt sich eine bevorzugte Verfahrensweise des Vermengens der Oxalsäure mit Imidacloprid durch Wiegen.

Mit dieser Verfahrensweise kann in besonders exakter Weise das vorgenannte stöchiometrische Verhältnis zu Imidacloprid eingestellt werden, so dass sich der erfindungsgemäße Co-Kristall mit seinen besonders vorteilhaften Eigenschaften bevorzugt bildet.

Das Kompaktieren der Mischung A im Zuge des erfindungsgemäßen Verfahrens, wie auch im Zuge der Herstellung der vorgenannten erfindungsgemäßen Pulverformulierung kann bevorzugt entweder durch Extrudieren oder durch Walzenkompaktieren oder durch eine Kombination der beiden Verfahrensschritte erfolgen.

Das vorgenannte Extrudieren und Walzenkompaktieren kombinieren zwei vorteilhafte Effekte.

Zum Einen trägt Extrudieren bzw. Walzenkompaktieren mechanische Energie in die Mischung A (die Pulver des Imidacloprid und der Oxalsäure) ein, so dass es - ohne an eine Theorie gebunden zu sein - an der Kornoberfläche der Pulver von Imidacloprid und Oxalsäure wohl zu einem "anschmelzen" kommt, wodurch an den Grenzflächen zwischen den Pulvern von Imidacloprid und Oxalsäure die für Co-Kristalle wesentlichen Wasserstoffbrückenbindungen ausgebildet werden.

Zum Anderen kompaktiert das Extrudieren und/oder Walzenkompaktieren die beiden Pulver dergestalt, dass die damit erhaltene Pulverformulierung ausgehend von dem Pulver mit einem größeren mittleren Partikeldurchmesser einen im Mittel noch größeren mittleren Partikeldurchmesser aufweist. Üblicherweise kommt es im Zuge eines solchen Kompaktierens durch Extrudieren und/oder Walzenkompaktieren auch zu einer gewissen Agglomeration von Partikeln, wobei solche Agglomerate bereits geeignete Vorstufen für eine Tablettierung darstellen. Zudem sind in den beiden vorgenannten Verfahrensvarianten des Kompaktierens keine freien beweglichen Teile im Prozessraum, die nach Ausführung des Verfahrensschrittes abgetrennt werden müssten, womit auch die Möglichkeit eines - unerwünschten - Verbleibs solcher freien beweglichen Teile in dem Produkt entfällt. Dies gestaltet die Herstellung sicherer.

Durch die beiden vorgenannten bevorzugten Kompaktierverfahren wird überraschenderweise genügend Energie in die Mischung A eingetragen, um Co-Kristalle zu erhalten. Üblicherweise ging man bisher davon aus, dass entweder ein intensiver Energieeintrag durch Mahlen notwendig ist, oder dass durch mindestens geringe Mengen eines geeigneten Lösungsmittels die vorstehend beschriebene Wasserstoffbrückenbindungsbildung befördert werden muss, um die Co-Kristalle zu erhalten.

Gleichsam sind aber Kompaktierverfahren im Allgemeinen nicht geeignet große Mengen Energie in Pulvermischungen einzubringen, so dass sich hierdurch eine automatische Grenze des Energieeintrages in die Mischung A ergibt, was verhindert, dass sich amorphe Mischphasen von Imidacloprid und/oder Oxalsäure ausbilden.

In einer bevorzugten Weiterbildung des vorliegenden erfindungsgemäßen Verfahrens kann nach dem Schritt b) im Zuge eines Schrittes c) der gemäß Schritt b) kompaktierten Mischung A ein pulverförmiger Füllstoff zugegeben werden, der in einem weiteren Schritte d) zusammen mit der kompaktierten Mischung A noch einmal kompaktiert wird.

Füllstoffe sind alle Stoffe, die der Fachmann auf dem Gebiet der Agrochemie als übliche Füllstoffe für feste Formulierungen von Wirkstoffen in Betracht ziehen würde.

Ein weiterer Gegenstand der vorliegenden Erfindung ist die Verwendung der erfindungsgemäßen Pulverformulierung umfassend Co-Kristalle von Imidacloprid mit Oxalsäure als Co-Former für die Herstellung von Mitteln zur Bekämpfung von Insekten.

Die Herstellung von Mitteln zur Bekämpfung von Insekten aus den erfindungsgemäß erhaltenen Pulverformulierungen umfasst beispielsweise das Einbringen und mindestens teilweise Auflösen der Pulverformulierung in einem Lösungsmittel. Ein insbesondere geeignetes Lösungsmittel ist beispielsweise Wasser.

Wie bereits zuvor im Zusammenhang mit den erfindungsgemäßen Pulverformulierungen umfassend Co-Kristalle mit Imidacloprid und Oxalsäure, erhalten aus dem Kompaktieren dieser Stoffe, ausgeführt, ist eine solche Verwendung besonders vorteilhaft, weil sich somit besonders hoch konzentrierte Lösungen herstellen lassen, die versprüht werden können, da die gebildeten Co-Kristalle üblicherweise eine bessere Löslichkeit aufweisen, als die jeweiligen Reinstoffe.

Die Erfindung wird nachfolgend anhand von Beispielen und Abbildungen näher erläutert, ohne sie jedoch hierdurch darauf zu beschränken.
Fig. 1 zeigt eine Pulver-Röntgenbeugungsanalyse des Pulvers erhalten aus Beispiel 1.
Fig. 2 zeigt eine Pulver-Röntgenbeugungsanalyse des Pulvers erhalten aus Beispiel 2.
Fig. 3 zeigt eine Pulver-Röntgenbeugungsanalyse einer Pulverformulierung erhalten aus Beispiel 4.
Fig. 4 zeigt einen Vergleich der Pulver-Röntgenbeugungsanalysen von Imidacloprid (A), Oxalsäure (B) und einer erfindungsgemäßen Pulverformulierung (C) aus Beispiel 4. In dieser Fig. 4 ergibt sich eine horizontale Basislinie mit y ∼ 20 a.u.
Fig. 5 zeigt Messdaten einer differentiellen Kalorimetrie (DSC) gemäß dem Beispiel 7, aufgetragen als bei einer Temperatur (T) aufgenommene Wärmeleistung (P) eines reinen Pulvers von Imidacloprid (A), einer Pulverformulierung aus Beispiel 4 (B) und eines Pulvers von Oxalsäure (C).
Fig. 6 zeigt Messdaten einer differentiellen Kalorimetrie (DSC) gemäß dem Beispiel 7, aufgetragen als bei einer Temperatur (T) aufgenommene Wärmeleistung (P) eines reinen Pulvers von Imidacloprid (A), eines Pulvers aus Beispiel 1 (B) und eines Pulvers von Oxalsäure (C).

### Beispiele:

### Beispiel 1: Herstellen eines ersten Pulvers (nicht erfindungsgemäß)

164 mg eines Pulvers von Imidacloprid (Fa. Bayer CropScience AG) wurden mit 59 mg eines Pulvers von Oxalsäure in einem 2 ml Reaktionsgefäß (Fa. Eppendorf) vermischt. Der Pulvermischung wurden 30 µl flüssiges Ethylacetat zugegeben. Der somit erhaltene Inhalt des vorgenannten Reaktionsgefäßes wurde zusammen mit 7 Edelstahlkugeln eines Durchmessers von 3 mm in eine Retsch MM200 Schwingmühle überführt und in dieser für 60 Minuten bei 30 Hz gemahlen.

Die Mahlkugeln wurden durch Sieben von dem Mahlgut abgetrennt.

Es wurde ein klebriges Pulver erhalten, das den Untersuchungen in Beispiel 6 und 7 zugeführt wurde.

### Beispiel 2: Herstellen eines zweiten Pulvers (nicht erfindungsgemäß)

161 mg eines Pulvers von Imidacloprid (Fa. Bayer CropScience AG) wurden mit 58 mg eines Pulvers von Oxalsäure in einem 2 ml Reaktionsgefäß (Fa. Eppendorf) vermischt. Der Pulvermischung wurden 30 µl flüssiges Aceton zugegeben. Der somit erhaltene Inhalt des vorgenannten Reaktionsgefäßes wurde zusammen mit 7 Edelstahlkugeln eines Durchmessers von 3 mm in eine Retsch MM200 Schwingmühle überführt und in dieser für 60 Minuten bei 30 Hz gemahlen.

Die Mahlkugeln wurden durch Sieben von dem Mahlgut abgetrennt.

Es wurde ein klebriges Pulver erhalten, das den Untersuchungen in Beispiel 6 zugeführt wurde.

### Beispiel 3: Herstellen eines Einkristalls des Co-Kristall

2 ml einer gesättigten Imidacloprid-Lösung in Aceton wurden mit 2 ml gesättigter Oxalsäure-Lösung in Aceton versetzt und durch Schütteln vermischt. Über Nacht bildeten sich bei Raumtemperatur (23°C) und unter Umgebungsdruck (1013 hPa) Kristalle von ca. 1 mm Größe. Einzelne Kristalle wurden entnommen und der Untersuchung gemäß dem Beispiel 8 zugeführt.

Der Versuch diente lediglich dem sicheren Nachweis der prinzipiellen Existenz eines Co-Kristalls.

### Beispiel 4: Herstellen einer ersten erfindungsgemäßen Pulverformulierung (Extrusion)

739,5 g Imidacloprid und 260,5 g Oxalsäure wurde homogen vermischt und die erhaltene Pulvermischung wurde kontinuierlich in einen gleichlaufenden Doppelschneckenextruder mit Misch- und Knetelementen (Clextral BC21) dosiert.

Die Extrusion wurde mit einer Dosierung von 0,5 kg/h und einer Schneckenumdrehung von 75 U/min durchgeführt. Lösemittel oder Gleitmittel wurden nicht verwendet.

Das extrudierte Gut lag pulverförmig vor und wurde den Untersuchungen in Beispiel 6 und 7 zugeführt.

### Beispiel 5: Herstellen einer zweiten erfindungsgemäßen Pulverformulierung (Walzenkompaktieren)

Eine 1:1 molare Mischung aus Imidacloprid und wasserfreier Oxalsäure wurden in einem Mischer homogen vermischt und kontinuierlich in einen Walzenkompaktor (Hosokawa Bepex) dosiert.

Das kompaktierte Gut lag weiterhin als grobes Pulver vor, das den Untersuchungen in den Beispielen 6 und 7 zugeführt wurde.

### Beispiel 6: Pulver-Röntgenbeugungsanalytische Messung (p-XRD) der Pulver gemäß Beispiel 1, Beispiel 2 und Pulverformulierung gemäß Beispiel 4 und Beispiel 5

Das aus den Beispielen 1 und 2 erhaltene Pulver, bzw. die aus den Beispielen 4 und 5 erhaltenen Pulverformulierungen wurden mittels eines Röntgendiffraktometer (Fa. Stoe, Typ. STADI-P Transmissionsdiffraktometer, Primärmonochromator: Ge[1 1 1], Strahlungsquelle; Cu_{Kα1}, Wellenlänge 1.54 Ä, Detektor: Linearer PSD, Temperatur (Messung): 100 K) untersucht.

Weiter wurden in analoger Weise Reinstoffpulver von Imidacloprid und Oxalsäure vermessen.

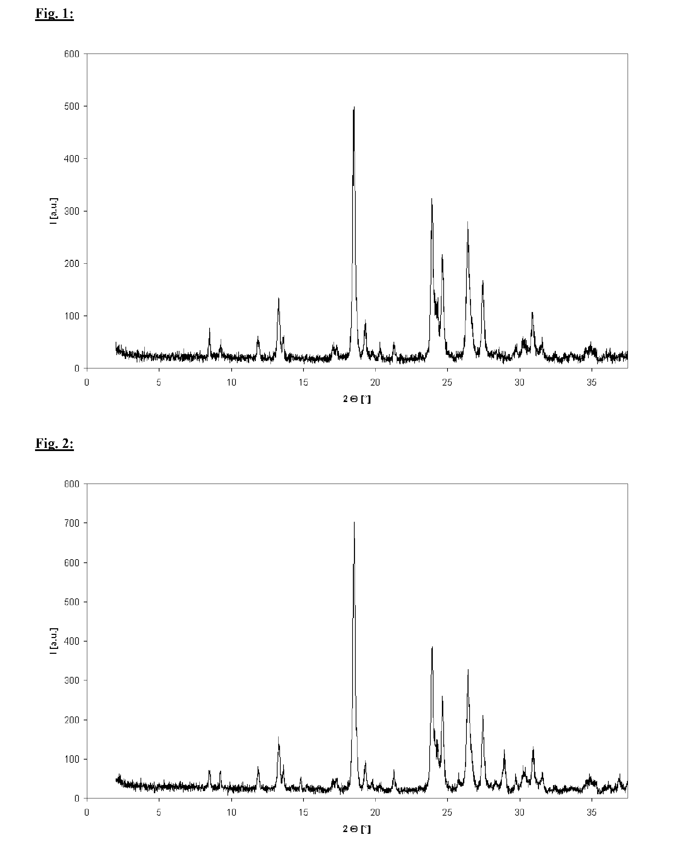

Die Untersuchung des Pulvers aus dem Beispiel 1 ergab das in Fig. 1 dargestellte charakteristische Pulver-Röntgendiffraktogramm.

Die Untersuchung des Pulvers aus dem Beispiel 2 ergab das in Fig. 2 dargestellte charakteristische Pulver-Röntgendiffraktogramm.

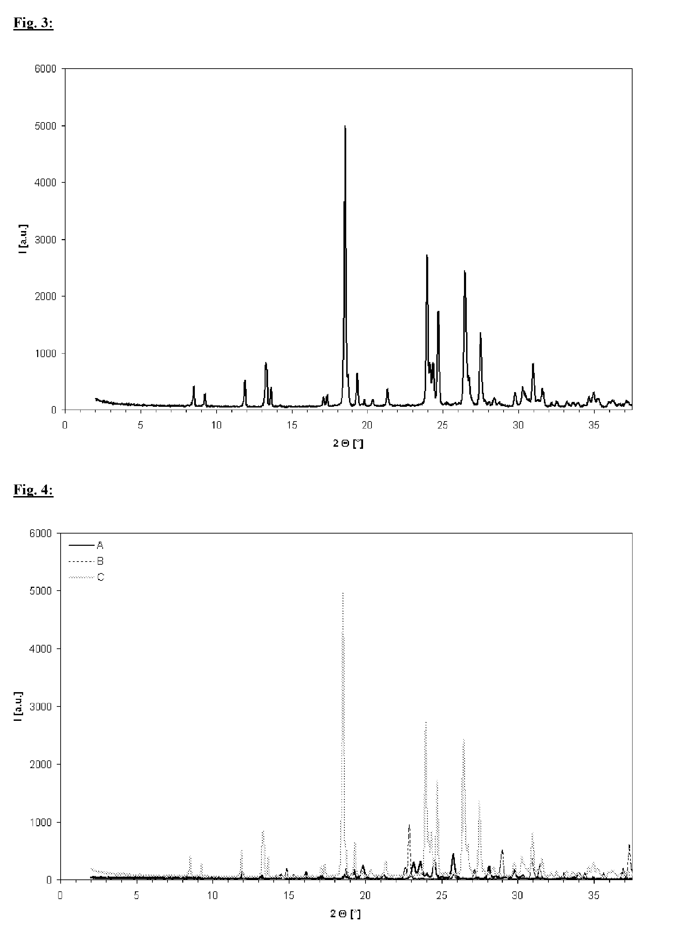

Die Untersuchung der Pulverformulierung aus dem Beispiel 4 ergab das in Fig. 3 dargestellte charakteristische Pulver-Röntgendiffraktogramm.

Der Vergleich der Messungen des Pulvers aus Beispiel 4 (C) mit den Messungen der Reinstoffpulver von Imidacloprid (A) und Oxalsäure (B) sind in Fig. 4 dargestellt.

Man erkennt, dass die Fig. 1, Fig. 2 und Fig. 3 Messergebnisse des gleichen Stoffes sind. Auf die Darstellung des Pulver-Röntgendiffraktogramms aus der Messung der Pulverformulierung aus Beispiel 5 wurde verzichtet, da diese identisch mit dem Ergebnis aus der Messung der Pulverformulierung aus Beispiel 4 ist.

Weiter erkennt man in dem in Fig. 4 dargestellten Vergleich der Messergebnisse, dass insbesondere im Bereich 2 Θ von 26° bis 27° der erfindungsgemäße Co-Kristall einen Messausschlag bei 2 Θ von etwa 26,4° aufweist, der für keine der beiden Reinsubstanzen gefunden wird. Weiter sind Messausschläge bei 2 Θ von etwa 18,5° und bei 2 Θ von etwa 27,5° erkennbar.

Es kann somit auch eindeutig geschlussfolgert werden, dass es sich bei den Stoffen aus den Beispielen 1, 2, 4 und 5 prinzipiell um einen ähnlichen Stoff handelt, der mit Sicherheit keine physikalische Mischung von Imidacloprid und Oxalsäure ist. Der Stoff aus den Beispielen 4 und 5 wurde zudem direkt und ohne Notwendigkeit der Reinigung von anderen Bestandteilen erhalten und weist bei gleicher Messmethode höhere Messausschläge auf, da keine Restbestandteile von Lösemitteln die Messung dämpfen können.

### Beispiel 7: Differentielle Kalorimetrie (DSC) des Pulvers gemäß Beispiel 1, bzw. Pulverformulierung Beispiel 4 und 5

Das aus dem Beispiel 1 erhaltene Pulver, bzw. die aus dem Beispiel 4 und 5 erhaltenen Pulverformulierungen, sowie reines Pulver von Imidacloprid und Oxalsäure werden in einem Differentiellen Kalorimeter (Fa. Mettler-Toledo, Typ: DSC 822, Starttemperatur 100°C, Heizrate 5°C/min; Endtemperatur: 220°C) untersucht.

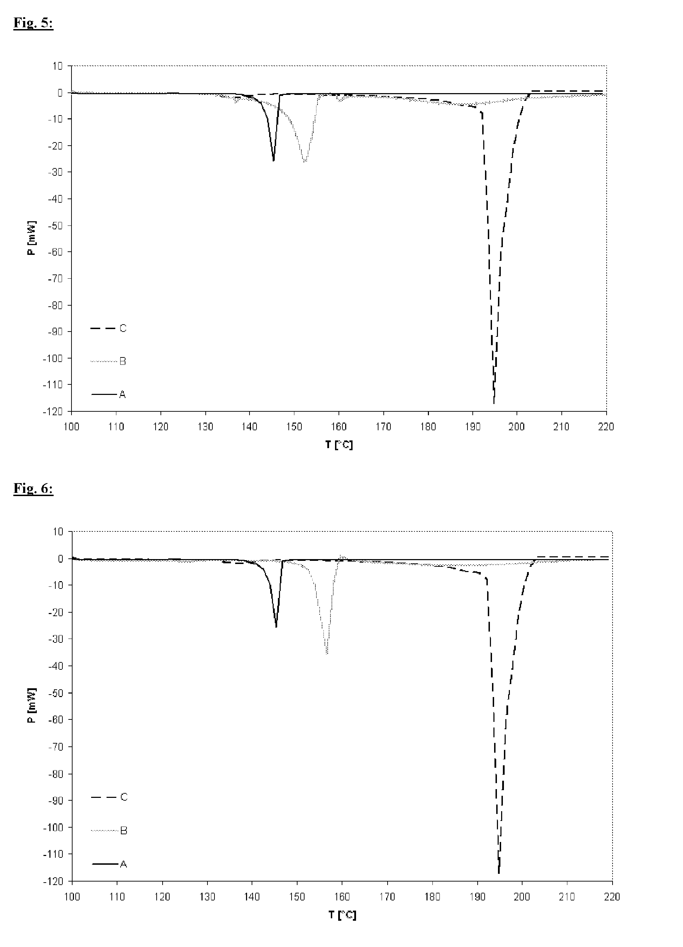

Die Ergebnisse der Messungen der Pulverformulierung aus Beispiel 4 sind in der Fig. 5 dargestellt. Man erkennt für jedes der untersuchten Pulver nur jeweils einen Schmelzpunkt, was im Fall des Pulvers von Imidacloprid (A) der Schmelzpunkt von etwa 144°C der Reinsubstanz (zweite Kristallmodifikation) ist, im Fall von Oxalsäure (C) der Schmelzpunkt von etwa 195°C der Reinsubstanz ist, der bei der Pulverformulierung (B) aus dem Beispiel 4 verändert ist und etwa 152°C beträgt. Die Feststellung, dass jeweils nur ein Schmelzpunkt ermittelt wurde zeigt, dass es sich bei der Pulverformulierung nicht um ein Gemisch von Stoffen handelt.

Die Untersuchung des Pulvers aus dem Beispiel 1 ist in der Fig. 6 dargestellt. Auch hier erkennt man für jedes der untersuchten Pulver nur jeweils einen Schmelzpunkt, was im Fall des Pulvers von Imidacloprid (A) der Schmelzpunkt von etwa 144°C der Reinsubstanz (zweite Kristallmodifikation) ist, im Fall von Oxalsäure (C) der Schmelzpunkt von etwa 195°C der Reinsubstanz ist, der bei dem Pulver (B) aus dem Beispiel 1 verändert ist und etwa 156°C beträgt.

Die Feststellung, dass jeweils nur ein Schmelzpunkt ermittelt wurde zeigt, dass es sich bei der Pulverformulierung nicht um ein Gemisch von Stoffen handelt und der Vergleich mit der Fig. 5 zeigt einen leichten Unterschied im Schmelzpunkt.

Somit wird eine Pulverformulierung mit einem Schmelzpunkt erhalten, der gegenüber reinem Imidacloprid erhöht ist und der sich von jenem eines anders hergestellten Pulvers unterscheidet. Auf die separate Darstellung des Ergebnisses aus Beispiel 5 wird hier verzichtet, da ein identisches Ergebnis erhalten wurde.

### Beispiel 8: Röntgenbeugungsanalyse (XRD) des Einkristalls gemäß Beispiel 3

Ein farbloser Kristall der ungefähren Abmaße 0,60 x 0,40 x 0,40mm³ aus Beispiel 3 wurde in einem Röntgendiffraktometer (Fa. Oxford Diffraction, Typ: Xcalibur) ausgerüstet mit einem CCD Flächendetektor (Model: Ruby), einer Cu_{Kα} Strahlungsquelle und einer Cryojet Niedrigtemperaturvorrichtung (T =100 K) untersucht. Die Messdaten wurden in alle Raumrichtungen aufgenommen, d.h. es wurde der Detektor um einen horizontalen und einen vertikalen Winkel vollständig um die Probe bewegt.

**Tabelle 1: Versuchs- und Messdaten gemäß Beispiel 8**

| **Parameter** | **Wert** | |
|---|---|---|
| Temperatur (Messung) | 100 K | |
| Wellenlänge (Messung) | 1,54178 Å | |
| Morphologie | Triklin | |
| Raumgruppe | P-1 | |
| Dimension der Einheitszelle | a = 7.1564(4) Å | α= 89.977(3)° |
| | b = 10.1184(3) Å | β= 74.618(4)° |
| | c = 10.6975(5) Å | γ = 71.179(4)° |
| Volumen der Einheitszelle | 703.85(6) Å³ | |
| Dichte (berechnet) | 1,631 Mg/m3 | |
| Absorptionskoeffizient | 2.820 mm⁻¹ | |

Die Messdaten wurden mittels der Software Crysalis (Fa. Oxford Diffraction 2007) gesammelt und protokolliert. Die Lösung der Kristallstrukturgleichungen wurde mittels direkter Methoden ausgeführt, wie sie in dem verwendeten Programm SHELXTL Version 6.10 (Sheldrick, Universität Göttingen, Germany, 2000) implementiert sind. Hiernach wurden die Daten visualisiert, wonach ein stöchiometrisches Verhältnis von Imidacloprid zu Oxalsäure von 1:1 erkannt werden kann.

Eine Übersicht über die wesentlichen Versuchs- und Messdaten wird in der Tabelle 1 gegeben.

## Patentansprüche

1. Pulverformulierung umfassend Imidacloprid und Oxalsäure hergestellt durch ein Verfahren, das **dadurch gekennzeichnet ist, dass** Imidacloprid und Oxalsäure als Co-Former in Pulverform zusammen kompaktiert werden.

2. Pulverformulierung gemäß Anspruch 1, d**adurch gekennzeichnet**, dass das Kompaktieren durch Extrusion und/oder Walzenkompaktierung erfolgt.

3. Pulverformulierung gemäß Anspruch 1 oder 2, **dadurch gekennzeichnet, dass** sie einen Schmelzpunkt, gemessen mittels differentieller Kalorimetrie (DSC) im Bereich von 150°C bis 160°C aufweist.

4. Pulverformulierung gemäß einem der vorstehenden Ansprüche, **dadurch gekennzeichnet, dass** sie gegenüber dem Pulver der beiden Ausgangsstoffe Imidacloprid und Oxalsäure jeweils einen größeren mittleren Partikeldurchmesser aufweist.

5. Pulverformulierung gemäß einem der vorstehenden Ansprüche, **dadurch gekennzeichnet, dass** das stöchiometrische Verhältnis von Imidacloprid zu Oxalsäure in der Pulverformulierung 1:1 beträgt.

6. Pulverformulierung gemäß einem der vorstehenden Ansprüche, **dadurch gekennzeichnet, dass** sie im p-XRD einen Messausschlag bei 2 Θ von 26° bis 27° aufweist.

7. Verfahren zur Herstellung einer Pulverformulierung umfassend einen Co-Kristall von Imidacloprid und Oxalsäure, **dadurch gekennzeichnet, dass** es mindestens die Schritte
a) Vermengen von Pulvern von Imidacloprid und Oxalsäure unter Erhalt einer Mischung A und
b) gemeinsames Kompaktieren der beiden Pulver der Mischung A umfasst.

8. Verfahren gemäß Anspruch 7, **dadurch gekennzeichnet, dass** nach dem Schritt b) im Zuge eines Schrittes c) der gemäß Schritt b) kompaktierten Mischung A ein pulverförmiger Füllstoff zugegeben wird, der in einem weiteren Schritte d) zusammen mit der kompaktierten Mischung A noch einmal kompaktiert wird.

9. Verfahren gemäß Anspruch 7 oder 8, **dadurch gekennzeichnet, dass** das ein Kompaktieren gemäß dem Schritt b) oder c) durch Extrusion und/oder Walzenkompaktierung erfolgt.

10. Verwendung der Pulverformulierung gemäß einem der Ansprüche 1 bis 6 für die Herstellung von Mitteln zur Bekämpfung von Insekten.
